# EUROPEAN PATENT SPECIFICATION

(11) **EP 2 670 223 B1**
(45) Date of publication and mention of the grant of the patent: **22.03.2017**
(21) Application number: 13167075.4
(22) Date of filing: 08.05.2013
(51) Int. Cl.: H05B 37/02

(54) **Lighting system with reduced standby power**
Beleuchtungssystem mit reduzierter Standbystromversorgung
Système d'éclairage avec réduction de puissance de veille

(30) Priority: 31.05.2012 KR 20120058891
(43) Date of publication of application: 04.12.2013
(73) Proprietor: LG Innotek Co., Ltd., Seoul 100-714 (KR)
(72) Inventor: Chung, Won Suk, 100-714 Seoul (KR)
(74) Representative: DREISS Patentanwälte PartG mbB

(56) References cited:
- WO-A2-2009/027962
- US-A1- 2008 157 685
- US-A1- 2012 025 608

## Description

### BACKGROUND

The embodiment relates to a lighting system with reduced standby power. More particularly, the embodiment relates to a standby power cut-off system using wireless communication.

Standby power refers to power being consumed even after a power source is switched off, that is, electric energy being continuously consumed regardless of the operation of electric appliances.

In general, a lighting device employs a dimmer to properly maintain intensity of lighting according to indoor environment and to reduce unnecessary power consumption. The dimmer is connected to the lighting device to control the on/off operation, the lighting level, and the color temperature level of the lighting device.

Recently, with the development of wireless communication technologies, a technology for collectively controlling a lighting device using a wireless dimmer from a remote place has been suggested. In this case, a control unit of a wireless dimmer must be always kept in the normal operation in order to control the operation of each lighting device, so power is unnecessarily consumed.

US2008/157685A1 discloses an AC inverter circuit that supplies power to multiple lamps in a LCD backlight.

### SUMMARY

The embodiment provides a lighting system with reduced standby power.

A lighting system with reduced standby power according to the embodiment includes a main control unit to control a lighting device according to a control signal; a driver connected to the main control unit to supply the control signal to the lighting device; and an AC-DC converting circuit to supply power to the driver, wherein the main control unit includes
lighting control unit to control the lighting device; a standby power supply unit to supply standby power; and a power control unit to maintain a voltage or a current of the standby power supply unit in a predetermined level.

A method of reducing standby power according to the embodiment includes charging a standby power supply unit with power supplied from an AC-DC converting circuit in a normal mode; checking whether a lighting off signal is transmitted from an outside and switching off a lighting, and simultaneously, shutting off the power supplied from the AC-DC converting circuit when the lighting off signal is transmitted; changing an operation mode of a lighting device from a normal mode to a standby mode; checking whether a voltage of the standby power supply unit is less than a predetermined level by sensing the voltage of the standby power supply unit; and charging the standby power supply unit when the voltage of the standby power supply unit is less than the predetermined level.

According to the embodiment, the standby power supply unit is charged by periodically checking the voltage or a current of the standby power supply unit that provides the standby power so that the standby power can be effectively reduced.

### BRIEF DESCRIPTION OF THE DRAWINGS

FIG. 1 is a block diagram of a lighting system according to the embodiment; and
FIG. 2 is a flowchart showing a method of reducing standby power of a lighting system according to the embodiment.

### DETAILED DESCRIPTION OF THE EMBODIMENTS

The advantages, the features, and schemes of achieving the advantages and features of the disclosure will be apparently comprehended by those skilled in the art based on the embodiments, which are described below in detail, together with accompanying drawings.

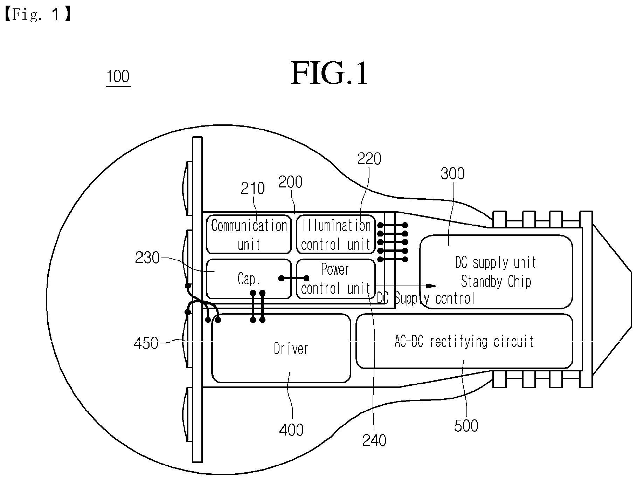

FIG. 1 is a block diagram of a lighting system according to the embodiment. Referring to FIG. 1, the lighting system 100 according to the embodiment includes a main control unit 200, a DC supply unit 300, a driver 400, a lighting 450 and an AC-DC converting circuit 500.

The embodiment is shown in FIG. 1 as a block diagram in which a diode, a condenser, a coil, a resistor, a switching device and a microprocessor constituting main components of the embodiment are omitted because the embodiment may be easily embodied by those skilled in the art based on the block diagram, so the detailed circuit diagram will be omitted.

The main control unit 200 includes a communication unit 210, a lighting control unit 220, a standby power supply unit 230 and a power control unit 240.

The communication unit 210 may perform wireless communication with external devices. For instance, when a lighting control signal, such as a lighting level signal or a color temperature level signal, is input from the outside, the communication unit 210 transfers the alighting control signal to the lighting control unit 220 to control the intensity of lighting (brightness) and the color temperature of the lighting 450 according to the lighting control signal. The wireless communication may be performed, for instance, through the radio frequency (RF) scheme.

The lighting control unit 220 is connected to the communication unit 210 to control the power supplied to the lighting 450. The lighting control unit 220 is connected to the driver 400 and transfers the lighting control signal received from the outside to the driver 400 to control the brightness and the color temperature of the lighting 450 according to the lighting control signal. The lighting control signal may be a dimming signal.

When a lighting off signal is input from the outside, the lighting control unit 220 turns off the lighting 450 by controlling the driver 400. In addition, the lighting control unit 220 changes the operation mode of the power control unit 240 to the standby mode. In the standby mode, the power control unit 240 is connected to the standby power supply unit 230 and the standby power supply unit 230 is charged for standby time by sensing the voltage of the standby power supply unit 230.

In detail, the power control unit 240 checks the voltage of the standby power supply unit 230 in a predetermined time interval and drives the DC supply unit 300 when a voltage value of the standby power supply unit 230 is lower than a predetermined value to charge the standby power supply unit 230 with the voltage supplied from the DC supply unit 300.

In this case, the power control unit 240 controls the DC supply unit 300 to operate in the normal mode from the standby mode such that the standby power supply unit 230 can be charged with the voltage having the predetermined value or more.

If the standby power supply unit 230 is charged with the voltage having the predetermined value or more, the power control unit 240 supplies a control signal to stop the operation of the DC supply unit 300 so that the operation mode of the DC supply unit 300 may be changed from the normal mode to the standby mode.

The standby power supply unit 230 is connected to the power control unit 240 and the communication unit 210 to supply standby power required for receiving the control signal from the outside to the communication unit 210. The standby power supply unit 230 may include a super capacitor.

The DC supply unit 300 is connected to the AC-DC converting circuit 500 to use DC power output from the AC-DC converting circuit 500 so that the standby power supply unit 230 can be charged without a separate driving power source.

If the feeding time of the standby power is set to the standby time or below according to the capacitance of the capacitor included in the standby power supply unit 230, the standby power can be supplied by sensing the voltage in a predetermined time interval as described above when the power is supplied.

The driver 400 is connected to the lighting 450 to supply power to the lighting 450. If necessary, the user can adjust the brightness of the lighting 450 by controlling the power supplied to the lighting 450.

The lighting 450 may include a light emitting diode LED, but the embodiment is not limited thereto.

The AC-DC converting circuit 500 converts input AC power into DC power and transfers the DC power to the driver 400 and may include a diode.

The standby power supply unit 230 and the power control unit 240 may be integrally formed with each other in the lighting system 100.

As described above, the voltage of the standby power supply unit 230 can be maintained in a predetermined level or more by sensing the voltage of the standby power supply unit 230 in a predetermined time interval even when the operation is finished as well as in the normal operation mode, so that the consumption of the standby power may be reduced even if the power source for the lighting 450 is switched off.

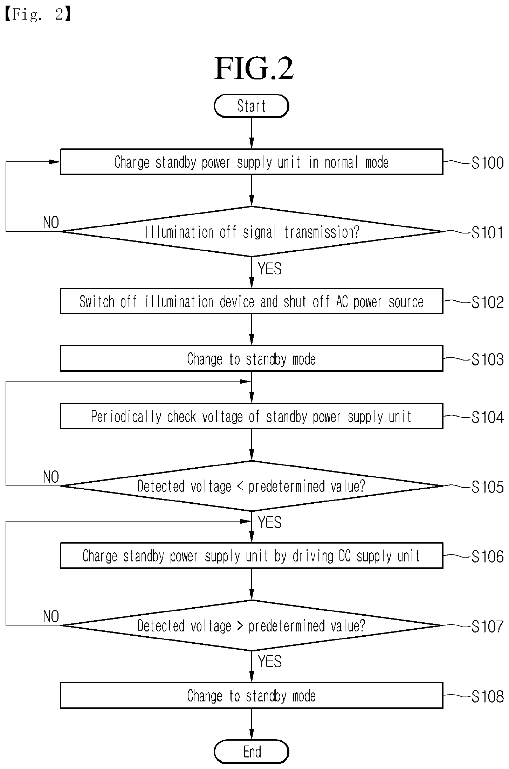

FIG. 2 is a flowchart showing a method of reducing standby power of the lighting system according to the embodiment.

Referring to FIG. 2, in the normal mode, the power supplied from the AC-DC converting circuit 500 is charged in the standby power supply unit 230 (S100). At this time, the power supplied from the AC-DC converting circuit 500 is also supplied to the driver 400.

Then, the communication unit 210 determines whether the lighting off signal is transmitted from the outside (S101). If the lighting off signal is transmitted from the outside, the lighting 450 is switched off through the lighting control unit 220 and the power supplied from the AC-DC converting circuit 500 is shut off (S102).

After that, the lighting control unit 220 changes the operation mode of the lighting device from the normal mode to the standby mode (S103). If the operation mode of the lighting device is changed to the standby mode, the communication unit 210 receives the standby power from the standby power supply unit 230.

Then, the power control unit 240 periodically checks the voltage of the standby power supply unit 230 (S104).

Next, it is checked whether the voltage of the standby power supply unit 230 is less than the predetermined value (S105).

If it is determined in step S105 that the voltage of the standby power supply unit 230 is less than the predetermined value, the power control unit 240 changes the operation mode of the DC supply unit 300 from the standby mode to the normal mode to charge the standby power supply unit 230 S106).

That is, when the operation mode of the lighting system 100 is the standby mode, the voltage state of the standby power supply unit 230 is periodically checked and the operation mode of the DC supply unit 300 is changed from the standby mode to the normal mode when the voltage of the standby power supply unit 230 is less than the predetermined value in order to charge the standby power supply unit 230.

After that, the power control unit 240 checks whether the voltage of the standby power supply unit 230 is more than the predetermined level (S107). If the voltage of the standby power supply unit 230 is more than the predetermined level, the operation mode of the DC supply unit 300 is changed again to the standby mode (S108).

## Claims

1. A lighting system with reduced standby power, the lighting system comprising:
a lighting device(450);
a main control unit (200) to receive a lighting control signal from an external device and to control the lighting device (450) according to the lighting control signal;
a driver (400) connected to the lighting device (450) to supply power to the lighting device (450); and
an AC-DC converting circuit (500) to supply power to the driver (400),
wherein the main control unit (200) comprises:
a lighting control unit (220) to control the power supplied to the lighting device(450);
a power control unit;
a standby power supply unit (230) to supply standby power to the power control unit in a standby mode; and
**characterised in that** the power control unit (240) is adapted to periodically check a voltage of the standby power supply unit (230) in the standby mode and to charge the standby power supply unit (230) when the voltage of the standby power supply unit(230) is less than a predetermined level.

2. The lighting system of claim 1, wherein the main control unit (200) comprises a communication unit (210) to receive the lighting control signal from the external device.

3. The lighting system of claim 2, wherein the communication unit (210) operates in a radio frequency (RF) scheme.

4. The lighting system of claim 1, wherein the standby power supply unit (230) comprises a super capacitor.

5. The lighting system of claim 1, further comprising a DC supply unit (300) connected to the AC-DC converting circuit (500) to supply power to the standby power supply unit (230).

6. The lighting system of claim 1, wherein the power control unit (240) checks the voltage of the standby power supply unit (230) in a predetermined time interval.

7. The lighting system of claim 5, wherein an operation mode of the DC supply unit (300) is changed from the standby mode to a normal mode when the voltage of the standby power supply unit(230) is less than the predetermined level in order to charge the standby
power supply unit(230), and
wherein the operation mode of the DC supply unit (300) is changed again to the standby mode when the voltage of the standby power supply unit is more than the predetermined level.

8. The lighting system of claim 7, wherein the standby power supply unit (230) and the power control unit (240) are integrally formed with each other in the lighting system.

9. The lighting system of claim 1, wherein the lighting device (450) comprises a light emitting
diode (LED).

10. A method of reducing standby power, the method comprising:
charging a standby power supply unit (230) with power supplied from an AC-DC converting circuit (500) in a normal mode;
checking whether a lighting off signal is transmitted from an external device; when the lighting off signal is transmitted said method comprises:
switching off a lighting device (450) ;
shutting of the power supplied from the AC-DC converting circuit (500);
changing an operation mode of a lighting system from a normal mode to a standby mode;
periodically checking whether a voltage of the standby power supply unit (230) is less than a predetermined level by sensing the voltage of the standby power supply unit (230); and
charging the standby power supply unit (230) when the voltage of the standby power supply unit (230) is less than the predetermined level.

11. The method of claim 10, wherein the checking of the voltage of the standby power supply unit (230) comprises changing an operation mode of a DC supply unit (300) to a standby mode when the voltage of the standby power supply unit (230) is equal to or higher than the predetermined level.

12. The method of claim 11, wherein the charging of the standby power supply unit (230) comprises charging the standby power supply unit (230) with the voltage received from the DC supply unit (300).

13. The method of claim 12, wherein the standby power supply unit (230) comprises a super capacitor.

14. The method of claim 13, wherein the sensing of the voltage of the standby power supply unit (230) comprises sensing the voltage of the standby power supply unit (230) in a predetermined time interval.

15. The method of claim 14, wherein the lighting off signal is received from the external device through a wireless communication.

## Patentansprüche

1. Beleuchtungssystem mit verringerter Standby-Leistung, wobei das Beleuchtungssystem Folgendes umfasst:
eine Beleuchtungsvorrichtung (450);
eine Hauptsteuereinheit (200) zum Empfangen eines Beleuchtungssteuersignals von einer externen Vorrichtung und zum Steuern der Beleuchtungsvorrichtung (450) gemäß dem Beleuchtungssteuersignal;
einen Treiber (400), der mit der Beleuchtungsvorrichtung (450) verbunden ist, zum Zuführen von Leistung zu der Beleuchtungsvorrichtung (450); und
eine Wechselstrom/Gleichstrom-Umsetzungsschaltung (500) zum Zuführen von Leistung zu dem Treiber (400),
wobei die Hauptsteuereinheit (200) umfasst:
eine Beleuchtungssteuereinheit (220) zum Steuern der der Beleuchtungsvorrichtung (450) zugeführten Leistung;
eine Leistungssteuereinheit;
eine Standby-Leistungs-Versorgungseinheit (230) zum Zuführen von Standby-Leistung zu der Leistungssteuereinheit in einem Bereitschaftsmodus; und
**dadurch gekennzeichnet, dass** die Leistungssteuereinheit (240) beschaffen ist, im Bereitschaftsmodus eine Spannung der Standby-Leistungs-Versorgungseinheit (230) periodisch zu überprüfen und die Standby-Leistungs-Versorgungseinheit (230) zu laden, wenn die Spannung der Standby-Leistungs-Versorgungseinheit (230) kleiner als ein vorgegebener Pegel ist.

2. Beleuchtungssystem nach Anspruch 1, wobei die Hauptsteuereinheit (200) eine Kommunikationseinheit (210) zum Empfangen des Beleuchtungssteuersignals von der externen Vorrichtung umfasst.

3. Beleuchtungssystem nach Anspruch 2, wobei die Kommunikationseinheit (210) in einem Hochfrequenzschema (HF-Schema) arbeitet.

4. Beleuchtungssystem nach Anspruch 1, wobei die Standby-Leistungs-Versorgungseinheit (230) einen Superkondensator umfasst.

5. Beleuchtungssystem nach Anspruch 1, das ferner eine DC-Versorgungseinheit (300), die mit der Wechselstrom/Gleichstrom-Umsetzungsschaltung (500) verbunden ist, zum Zuführen von Leistung zu der Standby-Leistungs-Versorgungseinheit (230) umfasst.

6. Beleuchtungssystem nach Anspruch 1, wobei die Leistungssteuereinheit (240) die Spannung der Standby-Leistungs-Versorgungseinheit (230) in einem vorgegebenen Zeitintervall prüft.

7. Beleuchtungssystem nach Anspruch 5, wobei ein Betriebsmodus der DC-Versorgungseinheit (300) aus dem Bereitschaftsmodus in einen normalen Modus geändert wird, wenn die Spannung der Standby-Leistungs-Versorgungseinheit (230) kleiner als der vorgegebene Pegel ist, um die Standby-Leistungs-Versorgungseinheit (230) zu laden, und
wobei der Betriebsmodus der DC-Versorgungseinheit (300) abermals in den Bereitschaftsmodus geändert wird, wenn die Spannung der Standby-Leistungs-Versorgungseinheit größer als der vorgegebene Pegel ist.

8. Beleuchtungssystem nach Anspruch 7, wobei die Standby-Leistungs-Versorgungseinheit (230) und die Leistungssteuereinheit (240) in dem Beleuchtungssystem einteilig miteinander ausgebildet sind.

9. Beleuchtungssystem nach Anspruch 1, wobei die Beleuchtungsvorrichtung (450) eine Leuchtdiode (LED) umfasst.

10. Verfahren zum Verringern der Standby-Leistung, wobei das Verfahren umfasst:
Laden einer Standby-Leistungs-Versorgungseinheit (230) mit der von einer Wechselstrom/Gleichstrom-Umsetzungsschaltung (500) zugeführten Leistung in einem normalen Modus;
Prüfen, ob von einer externen Vorrichtung ein Beleuchtungsausschaltsignal gesendet wird;
wobei, wenn das Beleuchtungsausschaltsignal gesendet wird, das Verfahren umfasst:
Ausschalten einer Beleuchtungsvorrichtung (450);
Abstellen der von der Wechselstrom/Gleichstrom-Umsetzungsschaltung (500) zugeführten Leistung;
Ändern eines Betriebsmodus eines Beleuchtungssystems aus einem normalen Modus in einen Bereitschaftsmodus;
periodisches Prüfen, ob eine Spannung der Standby-Leistungs-Versorgungseinheit (230) kleiner als ein vorgegebener Pegel ist, durch das Abtasten der Spannung der Standby-Leistungs-Versorgungseinheit (230); und
Laden der Standby-Leistungs-Versorgungseinheit (230), wenn die Spannung der Standby-Leistungs-Versorgungseinheit (230) kleiner als der vorgegebene Pegel ist.

11. Verfahren nach Anspruch 10, wobei das Prüfen der Spannung der Standby-Leistungs-Versorgungseinheit (230) das Ändern eines Betriebsmodus einer DC-Versorgungseinheit (300) in einen Bereitschaftsmodus umfasst, wenn die Spannung der Standby-Leistungs-Versorgungseinheit (230) gleich dem oder höher als der vorgegebene Pegel ist.

12. Verfahren nach Anspruch 11, wobei das Laden der Standby-Leistungs-Versorgungseinheit (230) das Laden der Standby-Leistungs-Versorgungseinheit (230) mit der von der DC-Versorgungseinheit (300) empfangenen Spannung umfasst.

13. Verfahren nach Anspruch 12, wobei die Standby-Leistungs-Versorgungseinheit (230) einen Superkondensator umfasst.

14. Verfahren nach Anspruch 13, wobei das Abtasten der Spannung der Standby-Leistungs-Versorgungseinheit (230) das Abtasten der Spannung der Standby-Leistungs-Versorgungseinheit (230) in einem vorgegebenen Zeitintervall umfasst.

15. Verfahren nach Anspruch 14, wobei das Beleuchtungsausschaltsignal von der externen Vorrichtung durch eine drahtlose Kommunikation empfangen wird.

## Revendications

1. Système d'éclairage avec puissance de veille réduite, ledit système d'éclairage comprenant :
un dispositif d'éclairage (450) ;
une unité principale de commande (200) permettant de recevoir un signal de commande de l'éclairage en provenance d'un dispositif extérieur et de commander le dispositif d'éclairage (450) en fonction du signal de commande de l'éclairage ;
un pilote (400) connecté au dispositif d'éclairage (450) afin d'alimenter le dispositif d'éclairage (450) en puissance ; et
un circuit de transformation CA-CC (500) permettant d'alimenter le pilote (400) en puissance ;
dans lequel l'unité principale de commande (200) comprend :
une unité de commande de l'éclairage (220) permettant de commander la puissance qui alimente le dispositif d'éclairage (450) ;
une unité de commande de la puissance ;
une unité d'alimentation de puissance de veille (230) permettant d'alimenter l'unité de commande de la puissance en puissance de veille en mode veille ; et
**caractérisé en ce que** l'unité de commande de la puissance (240) est conçue pour vérifier périodiquement une tension de l'unité d'alimentation de puissance de veille (230) en mode veille et pour charger l'unité d'alimentation de puissance de veille (230) lorsque la tension de l'unité d'alimentation de puissance de veille (230) est inférieure à un niveau prédéterminé.

2. Système d'éclairage selon la revendication 1, dans lequel l'unité principale de commande (200) comprend une unité de communication (210) permettant de recevoir le signal de commande de l'éclairage en provenance du dispositif extérieur.

3. Système d'éclairage selon la revendication 2, dans lequel l'unité de communication (210) fonctionne en mode radiofréquence (RF).

4. Système d'éclairage selon la revendication 1, dans lequel l'unité d'alimentation de puissance de veille (230) comprend un super condensateur.

5. Système d'éclairage selon la revendication 1, comprenant en outre une unité d'alimentation CC (300) connectée au circuit de transformation CA-CC (500) afin d'alimenter l'unité d'alimentation de puissance de veille (230) en puissance.

6. Système d'éclairage selon la revendication 1, dans lequel l'unité de commande de puissance (240) vérifie la tension de l'unité d'alimentation de puissance de veille (230) pendant un intervalle de temps prédéterminé.

7. Système d'éclairage selon la revendication 5, dans lequel un mode de fonctionnement de l'unité d'alimentation CC (300) passe d'un mode de veille en un mode normal lorsque la tension de l'unité d'alimentation de puissance de veille (230) est inférieure au niveau prédéterminé afin de charger l'unité d'alimentation de puissance de veille (230), et
dans lequel le mode de fonctionnement de l'unité d'alimentation CC (300) passe à nouveau en mode de veille lorsque la tension de l'unité d'alimentation de puissance de veille est supérieure au niveau prédéterminé.

8. Système d'éclairage selon la revendication 7, dans lequel l'unité d'alimentation de puissance de veille (230) et l'unité de commande de puissance (240) sont formées ensemble en une seule pièce dans le système d'éclairage.

9. Système d'éclairage selon la revendication 1, dans lequel le dispositif d'éclairage (450) comprend une diode électroluminescente (LED).

10. Procédé de réduction de la puissance de veille, ledit procédé comprenant :
la charge d'une unité d'alimentation de puissance de veille (230) avec une puissance alimentée à partir d'un circuit de transformation CA-CC (500) dans un mode normal ;
la vérification de la transmission ou non d'un signal d'arrêt de l'éclairage en provenance d'un dispositif extérieur ;
lorsque le signal d'arrêt de l'éclairage est transmis, ledit procédé comprend :
l'arrêt d'un dispositif d'éclairage (450) ;
la coupure de la puissance alimentée à partir du circuit de transformation CA-CC (500) ;
le passage d'un mode de fonctionnement d'un système d'éclairage d'un mode normal en un mode de veille ;
la vérification périodique qu'une tension de l'unité d'alimentation de puissance de veille (230) est inférieure ou non à un niveau prédéterminé en détectant la tension de l'unité d'alimentation de puissance de veille (230) ; et
la charge de l'unité d'alimentation de puissance de veille (230) lorsque la tension de l'unité d'alimentation de puissance de veille (230) est inférieure au niveau prédéterminé.

11. Procédé selon la revendication 10, dans lequel la vérification de la tension de l'unité d'alimentation de puissance de veille (230) comprend le passage d'un mode de fonctionnement d'une unité d'alimentation CC (300) à un mode de veille lorsque la tension de l'unité d'alimentation de puissance de veille (230) est égale ou supérieure au niveau prédéterminé.

12. Procédé selon la revendication 11, dans lequel la charge de l'unité d'alimentation de puissance de veille (230) comprend la charge de l'unité d'alimentation de puissance de veille (230) avec la tension reçue de l'unité d'alimentation CC (300).

13. Procédé selon la revendication 12, dans lequel l'unité d'alimentation de puissance de veille (230) comprend un super condensateur.

14. Procédé selon la revendication 13, dans lequel la détection de la tension de l'unité d'alimentation de puissance de veille (230) comprend la détection de la tension de l'unité d'alimentation de puissance de veille (230) pendant un intervalle de temps prédéterminé.

15. Procédé selon la revendication 14, dans lequel le signal d'arrêt de l'éclairage est reçu en provenance du dispositif extérieur par l'intermédiaire d'une communication sans fil.
